Europäisches Patentamt

European Patent Office

Office européen des brevets

(19)

(11) Numéro de publication: **0 140 726 B1**

# FASCICULE DE BREVET EUROPEEN

(12)

(45) Date de publication de fascicule du brevet:
**15.05.91**

(51) Int. Cl.⁵: **G01P 5/00, G01S 15/89**

(21) Numéro de dépôt: **84401670.9**

(22) Date de dépôt: **14.08.84**

(54) **Procédé de mesure des paramètres d'écoulement d'un fluide et dispositif mettant en oeuvre ce procédé.**

(30) Priorité: **24.08.83 FR 8313658**
**16.12.83 FR 8320198**

(43) Date de publication de la demande:
**08.05.85 Bulletin 85/19**

(45) Mention de la délivrance du brevet:
**15.05.91 Bulletin 91/20**

(84) Etats contractants désignés:
**AT BE DE FR GB IT NL SE**

(56) Documents cités:
**EP-A- 0 092 841**
**US-A- 4 265 126**
**US-A- 4 324 258**

**ISA TRANSACTIONS, volume 20, no. 2, 1981, Research Triangle Park, N.C. (US); E.R. GREENE et al.: "Noninvasive pulsed doppler blood velocity measurements and calculated flow in human digital arteries", pages 15-24**

**ELEKTRONIK, volume 26, no. 4, 1977 (MUNICH, DE); A. MARGANITZ: "Mikrowellen-Tachometer misst berührungs-**

**los Geschwindigkeitsmessung auch bei Schwebefahrzeugen", pages 95-98**

**ISA TRANSACTIONS, volume 15, no. 3, (1976), (PITTSBURGH, US); D.C. WINTER et al.: "Ultrasonic detection of cardiovascular flow disturbances", pages 237-241**

(73) Titulaire: **CGR ULTRASONIC**
**9, Chaussée de Paris**
**F-77102 Villenoy-les-Meaux(FR)**

(72) Inventeur: **Lannuzel, Olivier**
**THOMSON-CSF SCPI 173, bld Haussmann**
**F-75379 Paris Cedex 08(FR)**
Inventeur: **Pradal, Thierry**
**THOMSON-CSF SCPI 173, bld Haussmann**
**F-75379 Paris Cedex 08(FR)**

(74) Mandataire: **Schmit, Christian Norbert Marie et al**
**Cabinet Ballot-Schmit 7, rue Le Sueur**
**F-75116 Paris(FR)**

# EP 0 140 726 B1

## Description

L'invention concerne un procédé de mesure des paramètres d'écoulement d'un fluide et un dispositif mettant en oeuvre ce procédé. Ce procédé et ce dispositif sont plus particulièrement utilisés dans le domaine médical, le fluide considéré est alors le sang d'un patient, et les paramètres d'écoulement intéressants sont la vitesse moyenne d'écoulement du sang, et la distribution des vitesses des particules de ce sang dans une section particulière d'une veine ou d'une artère. Son application la plus utile est l'échographie ultrasonore.

La mesure de la vitesse moyenne d'un fluide dans un tube est intéressante parce qu'elle permet, connaissant la section du tube en question, de déterminer le débit de fluide. La distribution des vitesses des particules du fluide dans la section du tube permet d'apprécier la présence ou l'absence de turbulences dans l'écoulement. Ainsi, on conçoit intuitivement qu'un écoulement faiblement perturbé présente, en tous points d'une section, une vitesse d'écoulement sensiblement égale à la vitesse moyenne, alors qu'un écoulement fortement perturbé présente une grande dispersion de son diagramme de vitesse. Dans un écoulement turbulent il peut même y avoir des particules du fluide se déplaçant en sens inverse de la vitesse moyenne d'écoulement du fait de la présence de tourbillons.

Il est connu de mesurer la vitesse d'écoulement d'un volume élémentaire ou "cellule", d'un fluide en émettant au moyen d'une sonde en direction de cette cellule un signal impulsionnel acoustique vibrant à une fréquence acoustique. Le signal émis se propage jusqu'à la cellule, s'y réfléchit, et est rétrodiffusé dans toutes les directions et en particulier vers la sonde. Connaissant par ailleurs le temps de propagation aller-retour entre la sonde et une cellule étudiée, il est possible d'ouvrir une fenêtre temporelle de réception pour recevoir le signal rétrodiffusé et lui seul. Dans la pratique les sondes utilisées sont des sondes réversibles d'un type piezo-électrique, pouvant émettre périodiquement, selon une fréquence de récurrence donnée, le signal impulsionnel acoustique et pouvant recevoir, hors les temps d'émission, le signal rétrodiffusé. Du fait de sa réflexion sur une cellule en mouvement, et par effet Doppler, le signal rétrodiffusé vibre à une fréquence acoustique différente de la fréquence d'émission. Le glissement f entre ces deux fréquences, donné par effet DOPPLER, peut s'écrire:

$$f = 2 v c \cdot \cos\beta \cdot fo$$

Dans cette expression v et c représentent respectivement la vitesse d'une particule de la cellule réfléchissant le son, et la vitesse du son dans le milieu interposé. La grandeur $\beta$ est l'angle formé entre la direction du flux à l'intérieur du tube et l'axe du faisceau ultrasonore. La grandeur fo est la fréquence de l'impulsion ultrasonique émise.

Pour des raisons tant technologiques qu'expérimentales les dimensions utiles des cellules ne peuvent pas être réduites autant que désiré. Dans la plupart des cas chacune des dimensions de ces cellules, tant en largeur ou longueur qu'en profondeur, est tout à fait comparable aux dimensions de la section du tube d'écoulement. En conséquence le signal rétrodiffusé ne vibre pas à une fréquence acoustique unique, décalée par glissement Doppler de la fréquence acoustique d'émission mais est un signal complexe dont la distribution spectrale s'étend dans une bande significative. Par exemple, pour un ensemble de particules d'une cellule s'écoulant à des vitesses comprises entre zéro mètre par seconde et quatre mètres par seconde, le glissement Doppler correspondant à chacune de ces particules sera compris entre zéro et 25 kilohertz si la fréquence d'émission acoustique est de l'ordre de 4 Mégahertz et si la vitesse de propagation de l'impulsion acoustique dans le milieu interposé est de l'ordre de 1500 mètres par seconde.

Du fait de la correspondance intime entre une vitesse d'écoulement et un glissement Doppler il a été bâti une théorie de la mesure des paramètres d'écoulement d'un fluide par la mesure de la densité spectrale du signal rétrodiffusé. Si on appelle Z (t) le signal rétrodiffusé, sa densité spectrale Z (f) est le module pris au carré de la transformée de Fourier du signal Z (t) ; ceci peut s'écrire sous la forme suivante :

$$Z(f) = |\int Z(t) \cdot e^{-2\pi ft} \cdot dt|^2$$

Jusqu'à la présente invention il était connu de mesurer la vitesse moyenne d'écoulement du fluide en calculant tout le spectre Z (f) pour en calculer la fréquence moyenne et il était connu d'apprécier la nature plus ou moins turbulente de l'écoulement par l'écart type, ou variance, de ce spectre Z (f). La fonction Z (f) dont il est question dans la suite de cet exposé n'est pas à proprement parler le spectre du signal rétrodiffusé, mais le spectre du signal rétrodiffusé ayant subi une démodulation par la fréquence acoustique et un filtrage passe-bas pour n'être plus alors que représentatif du spectre du glissement Doppler seul. On peut montrer que ces considérations sont sans incidence sur la validité de l'expression de Z (f) précédente.

Partant de cette théorie, les hommes de l'art s'efforcent donc de calculer le plus précisément possible l'amplitude de chacune des raies du spectre de Z (f). Pour ce faire ils mettent en oeuvre des matériels effectuant une transformée de Fourier rapide du signal (en anglais FFT). En fait ces matériels FFT

2

effectuent une transformée de Fourier discrète du signal. C'est-à-dire que pour chaque impulsion du signal rétrodiffusé on démodule par deux oscillateurs en quadrature de phase le signal reçu, on filtre par un filtre passe-bas chacun des deux signaux ainsi démodulés, et on prélève des échantillons quantifiés au moyen d'échantillonneurs bloqueurs suivi de convertisseurs analogique-numérique au bout d'une durée toujours égale après le début de l'émission de l'impulsion. Les matériels FFT collectent ainsi une pluralité d'échantillons successifs correspondant à une pluralité d'impulsions du signal reçu.Ils délivrent après un temps de calcul un ensemble de grandeurs numériques réprésentatives des amplitudes de chacune des raies du spectre.

Ces matériels FFT présentent un premier inconvénient qui est lié à leurs circuits de calcul. En effet ceux-ci ne peuvent travailler que sur un nombre d'échantillons qui est une puissance de 2 : par exemple 64 ou 128 échantillons. Autant il est compréhensible que plus le nombre d'échantillons est grand plus la précision des résultats donnés par cette méthode est grande, autant il est non moins compréhensible que cette méthode entraîne des hypothèses sur la stationnarité du phénomène d'écoulement étudié. Si l'écoulement n'est pas stationnaire il y a lieu de ne le considérer stationnaire que pendant un temps limité ce qui entraîne une limitation du nombre d'échantillons à prendre en compte pour une précision donnée de la mesure. Si compte tenu de la stationnarité le nombre d'échantillons optimal est par exemple de l'ordre de 90, on constate que la mesure au moyen de matériels FFT présente des inconvénients puisque 90 n'est pas une puissance de 2.

Si l'on appelle $m_n$ les moments d'ordre n de la transformée de Fourier on peut écrire :

$$m_n = \int f^n \cdot Z(f) \cdot df$$

Il en résulte que $m_o$ est égal à l'énergie du signal rétrodiffusé, que $m_1$ correspond à la fréquence moyenne, et que la variance $\sigma$ recherchée est de la forme :

$$\sigma^2 = m_2 - m_1{}^2$$

Pour des raisons de normalisation il est admis de représenter la vitesse moyenne par

$$\frac{m_1}{m_o}$$

et la variance par :

$$\sigma^2 = \frac{m_2}{m_o} - \frac{m_1{}^2}{m_o}$$

Indépendamment du fait qu'il faut calculer chacun de ces trois termes, $m_o$, $m_1$, et $m_2$, ce qui est lourd, la méthode donne des résultats dont la précision dépend en grande partie du rapport signal sur bruit du signal rétrodiffusé. Dans la pratique le rapport signal sur bruit du signal rétrodiffusé doit être au minimum de 20dB. Or,les parois du tube d'écoulement provoquent la naissance d'échos fixes, situés en glissement Doppler autour de zéro hertz parce qu'en fait les parois vibrent un peu sous l'effet de l'écoulement. Ces échos fixes sont en général bien plus forts que le signal utile : leur amplitude est de l'ordre de 30dB supérieure à celui-ci. L'élimination des échos fixes nécessite donc la présence de filtres réjecteurs d'échos de technologie coûteuse puisque les flancs de ces filtres doivent être très raides pour pouvoir rejeter les échos à environ 30dB en dessous de la valeur du signal utile. Leur taux de réjection doit en effet être supérieur ou égal à 20dB + 30dB = 50dB.

Par ailleurs, en plus des bruits de mesure il y a lieu de tenir compte des bruits de quantification. En effet, du fait de la prise en compte d'une valeur approchée des grandeurs démodulées celles-ci apportent une erreur supplémentaire sur les résultats de calcul. Si N est la densité spectrale de bruit dans la bande du signal utile il y a lieu de remplacer Z (f) par Z (f) - N. S'il est possible de calculer N facilement en mesurant sa valeur en absence de signal rétrodiffusé il est par contre très lourd d'introduire N dans le calcul de chacun des moments de la transformée de Fourier Z (f). Une méthode faisant usage de la technique FFT est décrite dans US.A. 4265726.

Une autre méthode, décrite notamment dans US.A. 4324258, ne faisant pas appel à des matériels FFT, donne un diagramme du spectre du signal rétrodiffusé utile en comptant, pour chacune des impulsions, les passages par zéro du signal rétrodiffusé démodulé filtré. Pour une durée de comptage connue par avance le nombre des passages à zéro du signal démodulé filtré est directement proportionnel à la fréquence moyenne de ce signal pendant l'impulsion prise en compte. Cependant, il convient de remarquer que le résultat que cette méthode donne pour la fréquence moyenne, premièrement n'est pas un résultat exact, et dèuxièmement est très sensible au bruit. Le résultat n'est pas exact car on peut montrer qu'il est proportionnel à :

$$\frac{\sqrt{\int f^2 \cdot Z\,(f) \cdot df}}{\int f \cdot df}$$

qui en toute rigueur n'est pas égal à $\frac{m1}{m0}$ qui est la valeur vraie. La méthode de comptage des passages par zéro est par ailleurs intolérante au bruit parce que pour éviter, en présence de bruit, des comptages intempestifs les compteurs comportent un jeu de seuils inférieur et supérieur et seul le franchissement par le signal de ces deux seuils différents successivement provoque un comptage. En conséquence, d'une part la mesure de la fréquence moyenne est toujours obtenue par défaut puisque l'on ne prend pas en compte les oscillations du signal rétrodiffusé démodulé filtré dont les amplitude sont comprises entre ces deux seuils. D'autre part, plus le signal est bruité plus il convient d'élever chacun de ces seuils et plus le résultat est imprécis.

Enfin, une méthode faisant usage de la fonction d'autocorrélation du signal reçu est décrite dans EP.A. 0092841, publié le 02.11.83 et ayant la priorité du 28.04.82.

L'invention a pour objet de remédier aux inconvénients cités en posant le problème différemment. En effet, l'utilisateur n'est pas intéressé par tout le spectre du signal Doppler mais uniquement par sa moyenne et par sa variance. Aussi, plutôt que de calculer les amplitudes de chacune des raies du spectre et d'effectuer ensuite sur cette distribution d'amplitude des calculs de moments permettant d'évaluer la fréquence moyenne et la variance elle propose une méthode qui tout en étant moins riche dans la connaissance du phénomène calcule directement et uniquement les résultats qui intéressent l'utilisateur. L'invention part des considérations suivantes qu'il y a une relation étroite entre la densité sectrale Z (f) d'un signal Z (t) et la fonction d'autocorrélation R ($\tau$) de ce signal Z (t), et que les moments d'ordre n, $m_n$, de Z (f) sont égaux aux dérivés d'ordre n de la fonction d'autocorrélation calculée à $\tau = 0$ le paramètre $\tau$ étant défini ci-aprés. Ceci peut s'écrire sous la forme d'une expression générale :

$$\frac{1}{(j2\pi)^n} \cdot \frac{d^n R\,(\tau)}{d\tau^n}\bigg|_{\tau=0} = m_n = \int f^n \cdot Z\,(f) \cdot df$$

L'invention concerne un procédé de mesure des paramètres d'écoulement d'un fluide dans lequel
- on émet périodiquement selon une fréquence de récurrence $\frac{1}{\tau}$ un signal impulsionnel acoustique vibrant à une fréquence fo acoustique
- on reçoit le signal acoustique quand il est rétrodiffusé par une cellule du fluide à étudier ;
- on démodule en quadrature de phase le signal reçu à l'aide de deux oscillateurs oscillant à la fréquence fo du signal acoustique ;
- on filtre chacun des deux signaux démodulés et on les quantifie pour en extraire respectivement deux grandeurs électriques correspondant aux parties réelles et imaginaires d'un signal complexe échantillonné représentatif du signal reçu ;
  caractérisé en ce que :
- on calcule pour un nombre d'échantillons du signal complexe échantillonné la fonction d'autocorrélation discrète de ce signal complexe ;
- et en ce qu'on calcule les dérivés d'ordre n de cette fonction d'autocorrélation pour obtenir les paramètres d'écoulement du fluide qui correspondent à chacun de ces ordres.

L'invention concerne également un dispositif de mesure des paramètres d'écoulement d'un fluide comportant des moyens pour émettre périodiquement selon une fréquence de récurrence un signal impulsionnel acoustique vibrant à une fréquence acoustique, des moyens pour recevoir ce signal acoustique quand il est rétrodiffusé par une cellule du fluide à étudier, des moyens pour démoduler en quadrature

4

de phase le signal reçu comportant deux oscillateurs accordés à la fréquence du signal acoustique, et des moyens pour filtrer et quantifier chacun des deux signaux démodulés et pour produire ainsi un signal complexe échantillonné représentatif du signal reçu, caractérisé en ce qu'il comporte des moyens de retard pour calculer le produit d'un signal complexe échantillonné correspondant à un échantillon par le même signal correspondant à un échantillon immédiatement précédent, des moyens sommateurs pour sommer les signaux délivrés par les moyens de retard et pour calculer ainsi les parties réelles et imaginaires d'un signal complexe représentatif de la fonction d'autocorrélation discrète du signal complexe échantillonné, et des moyens pour calculer les dérivés d'ordre $\underline{n}$ de cette fonction d'autocorrélation correspondant aux paramètres d'écoulement du fluide.

L'invention sera mieux comprise à la lecture de la description qui suit et à l'examen des figures qui l'accompagnent.
- la figure 1 représente le diagramme d'un appareil de mesure conforme à l'invention ;
- la figure 2 représente un dispositif mettant en oeuvre le procédé de l'invention ;
- la figure 3 représente un dispositif mettant en oeuvre un procédé simplifié de l'invention ;
- les figures 4 à 6 représentent des variantes du dispositif de l'invention.

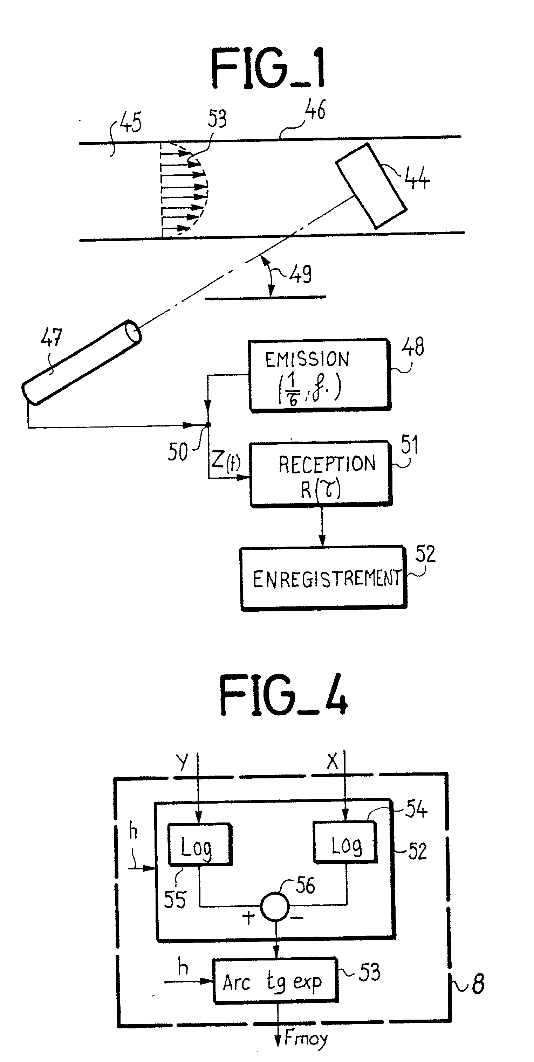

La figure 1 représente le diagramme général d'un appareil de mesure des paramètres d'écoulement d'un fluide conforme à l'invention. Une cellule 44 du fluide 45 circulant dans un tube 46 est soumise à une excitation acoustique émise par une sonde 47. Cette excitation acoustique est produite sous forme impulsionnelle par un émetteur 48. L'émetteur 48 délivre des impulsions au rythme de $\frac{1}{\tau}$. Le signal acoustique contenu dans ces impulsions vibre à une fréquence fo. La durée de chaque impulsion est de quelques périodes de la fréquence fo. L'orientation de la sonde 47, et donc la direction principale de propagation des ondes émises, fait avec la normale à la section du tube à l'endroit de la cellule un angle 49. Dans la pratique l'angle 49 vaut entre 45° et 60°. Au moyen d'un duplexeur 50, ou de tout autre moyen remplissant les mêmes fonctions, la sonde 47 d'un type réversible capte le signal Z (t) rétrodiffusé par la cellule et l'injecte dans un récepteur 51. Le récepteur 51 est conforme à l'invention et calcule en particulier la fonction d'autocorrélation R ($\tau$) du signal Z (t). Le récepteur 51 délivre les résultats de mesure des paramètres d'écoulement recherché. Ceux-ci peuvent être exploités de façon quelconque et en particulier être enregistrés dans un enregistreur 52. Ces paramètres correspondent au diagramme 53 des vitesses du fluide 45.

Connaissant un signal Z (t) la fonction d'autocorrélation R ($\tau$) de ce signal Z (t) peut s'écrire :
$$R(\tau) = \int Z(t) \cdot Z^*(t-\tau) \cdot dt = A(\tau) \cdot e^{j\phi(\tau)},$$
l'argument $\phi_{(\tau)}$ étant défini plus précisément ci-après puisque R ($\tau$) est ici un signal complexe. Si Z (t) est un signal échantillonné on peut définir une fonction d'autocorrélation discrète par la formule suivante

$$r(t) = \sum_P z_p \cdot z^*_{p-1} = X + jY$$

Dans cette formule P est le nombre total d'échantillons pris en compte pour le calcul de r ($\tau$), et p est l'indice temporel d'un échantillon, p - 1 étant l'échantillon qui est apparu immédiatement avant l'échantillon p. Par ailleurs, $z_p$ peut s'écrire:
$$\overline{z}_p = x_p + jy_p,$$
expression dans laquelle j est le nombre complexe tel que $j^2 = -1$ et où $x_p$ et $y_p$ sont les amplitudes du signal Z (t) une fois qu'il a été démodulé par deux oscillateurs en quadrature puis filtré et quantifié. Le signal z est dit signal complexe échantillonné.

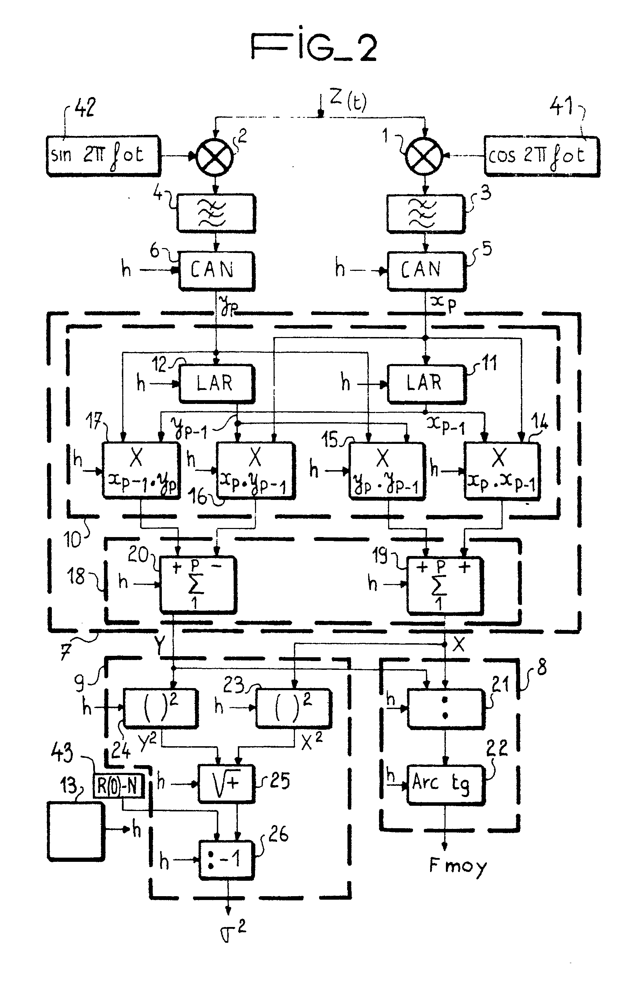

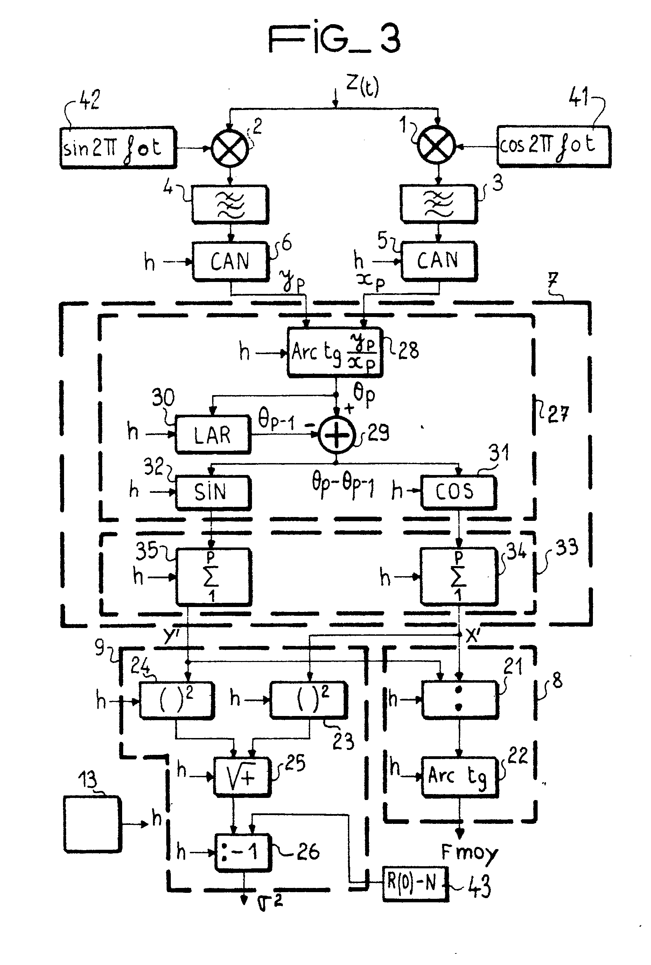

Sur la figure 2 comme sur la figure 3 le signal Z (t) est introduit simultanément sur une première entrée de deux démodulateurs 1 et 2 recevant respectivement sur leur deuxième entrée des signaux en quadrature, cos ($2\pi f_0 t$) et sin ($2\pi f_0 t$), délivrés par deux oscillateurs en quadrature 41 et 42. Ces deux démodulateurs effectuent une transposition du spectre Doppler d'une grandeur égale à $f_0$. Ils effectuent une démodulation dite en quadrature car les signaux qui les attaquent sur leur deuxième entrée sont en quadrature de phase l'un par rapport à l'autre. En faisant passer chacun des signaux démodulés à travers un filtre passe-bas, respectivement 3 et 4, et en les échantillonnant dans des échantillonneurs respectivement 5 et 6 comprenant chacun un échantillonneur-bloqueur suivi d'un convertisseur analogique-numérique (CAN), on obtient un signal complexe échantillonné dont la partie réelle $x_p$ est délivrée par l'échantillonneur 5 et dont la partie imaginaire $y_p$ est délivrée par l'échantillonneur 6. Les dispositifs des figures 2 et 3 comportent encore des circuits 7 pour calculer la fonction d'autocorrélation du signal Z (t) et des circuits 8 et 9 pour calculer les dérivés d'ordres 1 et 2 de cette fonction d'autocorrélation. Comme le signal échantillonné z est complexe, la fonction d'autocorrélation discrète r($\tau$) est complexe, et sa partie réelle est X, sa partie imaginaire étant Y.

Il ressort du procédé de l'invention que les inconvénients cités sont supprimés. En particulier, l'incidence du bruit disparaît car c'est une des propriétés d'une fonction d'autocorrélation d'un signal que de s'affranchir du bruit. En effet, le bruit n'étant pas corrélé sur lui-même sa fonction d'autocorrélation n'est différente de zéro que si $\tau$ est nul ; pour toute autre valeur de $\tau$ les variations désordonnées du signal de bruit font que la fonction d'autocorrélation de ce bruit est nulle. C'est pour cette raison que le calcul des moments d'ordre n donnés par l'expression générale des moments vue plus haut sera fait, avec une certaine restriction, non pas à $\tau = 0$ mais à $\tau$ égal à la période de récurrence des impulsions de mesure. On montrera que cette approximation se justifie. Par ailleurs, à l'opposé de la méthode des comptages par zéro on verra plus loin que les résultats donnés par le procédé de l'invention sont exacts. De plus, pour améliorer la précision il est possible de prendre un nombre d'échantillons optimal eu égard aux conditions de stationnarité du phénomène étudié et à la précision que l'on désire obtenir. Ceci n'est pas possible avec la méthode FFT. Enfin, si les concepts mathématiques qu'il faut manier pour calculer la fréquence moyenne et la variance sont ardus, les matériels à mettre en oeuvre qui résultent de ces calculs sont simples et entraînent une réduction significative des opérations de multiplication nécessaires pour arriver au résultat. En effet, dans le procédé de l'invention, comme dans celui de l'état de la technique utilisant des matériels FFT, le traitement des signaux se fait sous forme numérique, et l'on peut montrer que pour un nombre P d'échantillons pris dans chacun des deux procédés le nombre d'opérations de multiplications nécessaires dans la méthode de l'invention est inférieur dans un rapport $\text{Log}_2\, P$ de celui qui est nécessaire dans le procédé FFT ($\text{Log}_2\, P$ désigne le logarithme à base 2 de P).

Pour calculer le moment d'ordre 1 de la transformée de Fourier Z (f) correspondant à la vitesse moyenne d'écoulement du fluide et donc à la fréquence moyenne du spectre de Doppler on peut écrire en application de l'expression générale des moments :

$$m_1 = \int f \cdot Z(f) \cdot df = \frac{1}{j2\pi} \cdot \frac{d\,R(\tau)}{d\tau}\bigg|_{\tau=0} = \frac{R(\tau) - R(0)}{j2\pi\tau}$$

L'approximation de la dérivée première de R $(\tau)$ telle que représentée en fin de cette expression est juste car elle repose sur une propriété de la fonction d'autocorrélation à savoir que R $(-\tau)$ égale R $(\tau)$ conjugué. Dans ce cas $\tau$ est la période d'échantillonnage et correspond donc à l'inverse de la fréquence de récurrence. Or, R $(\tau)$ peut s'écrire :

$R(\tau) = A(t)e^{\,j\phi(\tau)}$

expression dans laquelle A $(\tau)$ est une fonction réelle symétrique et dans laquelle $\phi(\tau)$ est une fonction réelle antisymétrique. Il en résulte que l'on peut écrire :

$$\frac{d\,A(\tau)}{d\tau} = 0 \ \text{à} \ \tau = 0$$

ce qui entraîne tout calcul fait :

$$m_1 = \frac{A(\tau)}{2\pi} \cdot \frac{d\phi(\tau)}{d\tau} \cdot e^{\,j\phi(\tau)} \ \text{à} \ \tau = 0$$

On peut exprimer :

$$\frac{d\phi(\tau)}{d\tau}$$

sous la forme

$$\frac{d\phi(\tau)}{d\tau}\Big|_{\tau=0} \simeq \frac{\phi(\tau)-\phi(0)}{\tau}\Big|_{\tau=\tau} = \frac{\phi(\tau)}{\tau}$$

puisque $\phi(0)$ est nul sachant que $\phi(\tau)$ est une fonction réelle antisymétrique.

Pour la même raison, on a :

$m_o = R(O) = A(O)e^O = A(O)$.

En remarquant que $\phi(\tau)$ est l'argument de $R(\tau)$, on peut alors écrire :

$$m_1 = \frac{m_o}{2\pi\tau}\cdot Arg(R(\tau)) \simeq \frac{m_o}{2\pi\tau}\cdot Arg(r(\tau))$$

On peut encore écrire cette expression en exprimant $r(\tau)$ sous sa forme dépendant des échantillons $(x_p, y_p)$. On obtient donc une expression finale du moment d'ordre 1 de $Z(f)$ :

$$m_1 \simeq \frac{m_o}{2\pi\tau}\cdot Arc\,tg\,\frac{\sum\limits_{p}^{P}(y_p\cdot x_{p-1}-y_{p-1}\cdot x_p)}{\sum\limits_{p}(x_p\cdot x_{p-1}+y_p\cdot y_{p-1})} \simeq \frac{m_o}{2\pi\tau}\cdot Arc\,tg\,\frac{Y}{X}$$

On voit en conséquence que pour le calcul de

$$\frac{m_1}{m_o}$$

qui nous intéresse il suffit alors de calculer les parties réelles et imaginaires, X et Y, de la fonction d'autocorrélation discrète $r(\tau)$.

Le circuit 7 de la figure 2 comporte des moyens de retard 10 pour connaître, à chaque impulsion reçue, les grandeurs $x_p$ et $y_p$ du signal complexe échantillonné correspondant à l'échantillon de rang p et pour connaître les mêmes éléments de l'échantillon immédiatement précédent c'est-à-dire de rang p - 1. Pour ce faire les moyens de retard 10 comportent deux lignes à retard respectivement 11 et 12 reliées en cascade aux sorties des échantillonneurs 5 et 6. Ces lignes à retard 11 et 12 ne délivrent à leurs sorties l'information qu'elles reçoivent à un instant t qu'au bout d'un temps $t + \tau$, où $\tau$ correspond à la période d'échantillonnage précitée. Dans la pratique ces lignes à retard peuvent être constituées de registres à décalage, recevant sur leurs entrées en parallèle les informations binaires du signal quantifié délivré par les échantillonneurs, et restituant ces informations sur leurs sorties en parallèle sous l'effet d'une impulsion d'horloge h élaborée par un séquenceur 13. Ce séquenceur 13 est synchronisé avec l'émission des impulsions acoustiques.

Les moyens de retard 10 comportent en outre un jeu de multiplicateurs 14 à 17 recevant sur leurs entrées les parties réelles, x, ou imaginaires, y, du signal complexe échantillonné, correspondant à un échantillon donné et à un échantillon précédent, pour effectuer, au rythme imposé par le séquenceur 13 respectivement les multiplications suivantes :

$x_p\cdot x_{p-1}$, $y_p\cdot y_{p-1}$, $x_p\cdot y_{p-1}$, $x_{p-1}\cdot y_p\cdot$

Le circuit 7 de calcul de la fonction d'autocorrélation comporte, en cascade avec les moyens de retard 10, des moyens sommateurs 18 comportant deux sommateurs-accumulateurs 19 et 20 reliés respectivement par leurs entrées aux sorties des multiplicateurs 14-15 et 16-17. Ces sommateurs-accumulateurs effectuent pour un nombre P d'échantillons le calcul des valeurs réelles X et imaginaires Y de la fonction d'autocorrélation $r(\tau)$. Le nombre P d'additions successives effectuées par chacun des sommateurs-accumulateurs 19 ou 20 peut être choisi comme on le désire c'est-à-dire sans contrainte d'une proportionnalité quelconque à 2.

Les moyens 8 de calcul de la dérivée d'ordre 1 de la fonction d'autocorrélation comportent un diviseur 21 effectuant la division de la partie imaginaire Y de la fonction d'autocorrélation par la partie réelle X de cette même fonction, conformément à l'application de l'expression finale du moment d'ordre 1. En cascade avec le diviseur 21 se trouve une table d'arc-tangente 22 recevant en adresse sur ses entrées la valeur de la tangente d'un angle recherché et délivrant en sortie la valeur de cet angle. Dans la pratique tous les calculs effectués par les circuits numérotés 10 à 22 peuvent être effectués par un microprocesseur. Dans ce cas la table 22 est une mémoire morte préprogrammée capable de répondre à la transformation trigonométrique arc-tangente.

L'expression générale des moments d'ordre $\underline{n}$ de la transformée de Fourier Z (f) du signal Z (t) permet d'écrire :

$$\frac{d^2\, R\,(\tau)}{d\tau^2}\bigg|_{\tau=0} = -\,4\pi^2 \int f^2 .Z\,(f)\cdot e^{\,j2\pi f\tau}\,df\bigg|_{\tau=0}$$

En remplaçant dans le premier membre de cette égalité R ($\tau$) par son expression en fonction de son module A ($\tau$) et de son argument $\phi(\tau)$, en ayant notamment développé A ($\tau$) sous la forme d'un développement limité, et en ayant normalisé la variance pour la rendre indépendante de l'énergie du signal Z (t) on peut écrire une fois tous calculs faits :

$$\sigma^2 = -\,\frac{1}{2\pi^2\tau^2}\cdot\left(\frac{A\,(\tau)}{A\,(o)} - 1\right) = -\,\frac{1}{2\pi^2\tau^2}\left(\frac{|R\,(\tau)|}{R\,(0)} - 1\right)$$

Expression dans laquelle $\tau$ est la période d'échantillonnage égale à l'inverse de la fréquence de récurrence et dans laquelle A ($\tau$) est le module de R ($\tau$) tandis que A (0) est égal à R (0). Une fois rendu à cette étape il convient de remarquer que R (0) est en fait le module de la fonction d'autocorrélation du signal pour $\tau = 0$ en considérant qu'il n'y a pas de bruit, c'est à dire son énergie. Comme en fait le signal Z (t) est bruité il convient de remplacer R (0) par R (0) - N,N étant l'énergie du bruit dans la fenêtre d'analyse. Dans ces conditions l'expression finale de la variance sera équivalente à :

$$\sigma^2 = -\,\frac{1}{2\pi^2\tau^2}\left(\frac{|R\,(\tau)|}{R(O) - N} - 1\right)$$

Les moyens 9 de calcul du moment d'ordre 2 de la transformée de Fourier Z (f) effectuent tout simplement cette dernière opération. S'agissant d'un signal échantillonné il convient de remplacer R ($\tau$) par r ($\tau$). Or, par les moyens 7 de calcul de la fonction d'autocorrélation vue précédemment on dispose de la partie réelle X et de la partie imaginaire Y de cette dernière fonction. Le module d'un tel signal complexe étant égal à la racine carrée de la somme des carrés des parties réelles et imaginaires, on introduit chacun des signaux X ou Y sur les deux entrées d'un multiplicateur délivrant en sortie une grandeur représentant le carré de la grandeur admise en entrée. Les multiplicateurs 23 et 24 reçoivent respectivement sur leurs entrées les signaux X et Y. Un circuit 25 recevant sur ses entrées les sorties des multiplicateurs 23 et 24 effectue l'opération correspondant à la racine carrée de la somme des signaux introduits à ses entrées. Ce faisant la sortie du circuit 25 délivre une grandeur égale au module de r ($\tau$).

Un circuit 26 recevant sur une de ses entrées la sortie du circuit 25 et sur une autre entrée une grandeur électrique proportionnelle à (R (0) - N) effectue le rapport de ces deux grandeurs et leur retranche la quantité 1. L'obtention de (R (0) - N) ne présente pas de difficulté : R (0) est l'énergie moyenne du signal reçu c'est-à-dire le signal utile en présence de bruit. Cette énergie peut être mesurée par tous moyens classiques. N est l'énergie du bruit que l'on mesure avec des moyens identiques aux précédents, mais pendant une absence du signal utile c'est-à-dire en dehors de toute émission acoustique. La soustraction (R (0) - N) ne présente pas non plus de difficulté. L'ensemble de ces moyens est noté 43. Le circuit 26 délivre donc un signal représentatif de la variance du spectre Doppler correspondant à la variance de vitesse d'écoulement de la cellule du fluide étudié.

Dans une réalisation préférée toutes les opérations effectuées par les opérateurs 23 à 26 sous l'action du séquenceur 13 sont faites par un microprocesseur programmé à cet effet. Ce microprocesseur peut être le même que celui qui était utilisé pour le calcul de la fréquence moyenne. En particulier on constate que les circuits 23 et 24 effectuent des multiplications comme les multiplicateurs 14 à 17 et qu'ils correspondent donc dans le microprocesseur qui serait utilisé à un même type d'opérations. Le procédé et le dispositif qui viennent d'être décrits permettent donc de résoudre efficacement le problème posé.

Une simplification notable de ce procédé et de ce dispositif peut être obtenu en faisant une hypothèse supplémentaire sur la variation du module du signal complexe échantillonné tout au long des P échantillons pris en compte. En effet, l'expression $z_p$ de ce signal peut être écrite sous une nouvelle forme :

$$z_p = x_p + jy_p = \rho_p e^{i\theta}p$$

On suppose que le module $\rho_p$ varie peu au cours de la fenêtre d'analyse, c'est-à-dire qu'il est égal au module $\rho_{p-1}$ et ce pour tous les P échantillons pris en compte pour le calcul des paramètres intéressants. Il en résulte une simplification importante sur le calcul de l'argument de r (τ) qui devient :

$$\text{Arg}\,(r(\tau)) = \text{Arc tg}\, \frac{\sum\limits^{P} \sin(\theta_p - \theta_{p-1})}{\sum\limits_{P} \cos(\theta_p - \theta_{p-1})}$$

Aussi dans le circuit 7 du calcul de la fonction d'autocorrélationde la figure 3 calcule-t-on dans un circuit de retard 27 l'argument du signal complexe échantillonné pour chaque échantillon en introduisant les parties réelles $x_p$, et imaginaires $y_p$, de cet échantillon aux entrées d'adresses d'une table 28 effectuant la transformation trigonométrique arc-tangente de

$$\frac{y_p}{x_p}.$$

L'argument $\theta_p$ est alors introduit sur l'entrée "plus" d'un additionneur 29 tandis que l'argument $\theta_{p-1}$ est introduit sur l'entrée "moins" de cet additionneur 29. $\theta_{p-1}$ est obtenu en faisant passer $\theta_p$ à travers une ligne à retard 30 similaire aux lignes à retard 11 ou 12. Le signal délivré par l'additionneur 29 est alors transmis simultanément sur les entrées d'adresses d'une table de cosinus 31 et d'une table de sinus 32. Les deux tables 31 et 32 peuvent, comme les tables 22 et 28, être constituées de mémoires mortes, préprogrammées pour remplir ces fonctions trigonométriques.

Le circuit de retard 27 est suivi d'un circuit sommateur 33 comportant deux sommateurs-accumulateurs respectivement 34 et 35 reliés aux tables 31 et 32. Les sommateurs-accumulateurs 34 et 35 se différencient des sommateurs-accumulateurs 19 et 20 en ce qu'ils ne comportent qu'une seule entrée. Ces sommateurs-accumulateurs 34 et 35 délivrent respectivement en sortie des signaux X' et Y' correspondant aux parties réelles et imaginaires de la fonction d'autocorrélation discrète pour laquelle l'hypothèse sur la variation du module du signal complexe échantillonné a été faite. Le reste du traitement subi par ces signaux X' et Y' est identique à celui qui était subi par X et Y.

Le dernier circuit 7 de calcul de la fonction d'autocorrélation comprenant le circuit de retard 27 et le circuit sommateur 33 peut comme le circuit 7 de la figure 2 dans une réalisation préférée être remplacé par un microprocesseur qui effectue les mêmes calculs. Il présente l'avantage par rapport à celui de la figure 2 qu'il n'y a plus aucune opération de multiplication à effectuer. Les seules opérations effectuées sont des opérations de lecture de table et des opérations de sommation-accumulation. Il présente également l'avantage que tous les traitements peuvent être effectués en temps réel. On remarque enfin que dans une version où il est utilisé un microprocesseur la table 22 identique à la table 28 peut être unique et que par ailleurs les multiplicateurs 23 et 24 peuvent être remplacés par une table de carré délivrant en sortie un signal représentant le carré du signal admis à l'entrée.

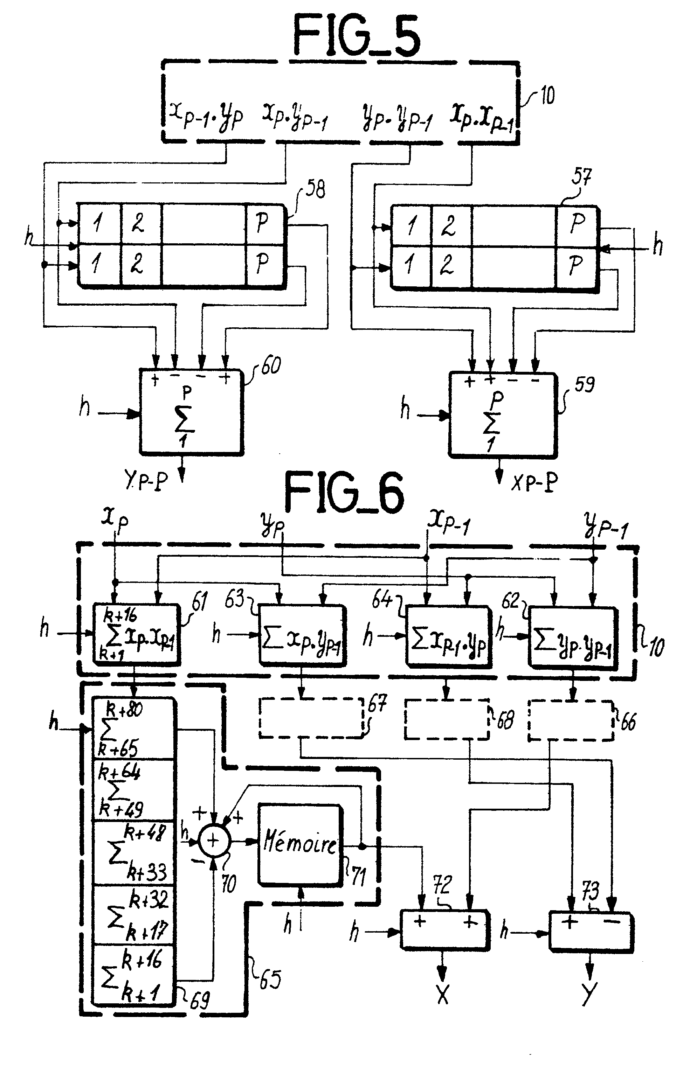

Sur la figure 4 les moyens 8 de calcul de la dérivée d'ordre 1 de la fonction d'autocorrélation comportent un diviseur 52 effectuant la division de la partie imaginaire Y de la fonction d'autocorrélation par la partie réelle X de cette même fonction, conformément à l'application de l'expression finale du moment d'ordre 1. En cascade avec le diviseur 52 se trouve une table d'arc-tangente 53 recevant en adresse sur ses entrées la valeur de la tangente d'un angle recherché et délivrant en sortie la valeur de cet angle. Pour des raisons de simplification le diviseur 52 peut être un diviseur logarithmique c'est-à-dire qu'il est composé de deux tables de logarithme, les tables 54 et 55 recevant en adresse respectivement les

9

grandeurs X et Y. Ces tables délivrent en sortie les valeurs Log X et Log Y respectivement. Un soustracteur 56, recevant les valeurs produites par ces tables élabore un résultat (Log Y - Log X) qui est équivalent à Log Y/X. Dans ces conditions la table 53 du calcul de l'arc tangente (Y/X) est remplacé par une table arc-tangente-exponentiel de Log Y/X.

Telle que l'invention vient d'être décrite, à chaque lot de P impulsions il est possible de calculer les paramètres d'écoulement du fluide. Pour suivre, en temps réel, l'évolution de ces paramètres il n'est pas nécessaire d'attendre la réception d'un autre lot de P impulsions. On peut en effet recombiner un nouvel échantillon qui arrive, de rang P + 1, avec les P - 1 derniers échantillons reçus pour effectuer une nouvelle mesure. Ainsi de proche en proche on dispose à chaque fois de P échantillons qui, en temps réel, sont toujours les P derniers reçus. Pour ce faire, dans la figure 5 , on remplace les sommateurs-accumulateurs 19 et 20 de la figure 2 par un jeu de deux registres à décalage, 57 et 58, suivi de deux sommateurs-accumulateurs 59 et 60. Dans ce cas les registres à décalage contiennent 2 P cases (P correspond au nombre d'échantillons optimum). Ces registres reçoivent les produits élaborés par les multiplicateurs 14 et 15 d'une part et 16 et 17 d'autre part. A chaque impulsion du séquenceur 13 un couple de produits réels $(y_p{}^\bullet y_{p-1}$ et $x_p{}^\bullet x_{p-1})$ et un couple de produits imaginaires $(x_{p-1}{}^\bullet y_p$ et $x_p{}^\bullet y_{p-1})$ sont introduits respectivement dans ces registres à décalage, tandis qu'un couple de produits réels et de produits imaginaires correspondant mais de rang antérieur (de rang p-P ; $y_{p-P}{}^\bullet y_{p-1-P}$ , $x_{p-P}{}^\bullet x_{p-1-P}$ ; et $x_{p-1-P}{}^\bullet y_{p-P}$ , $x_{p-P}{}^\bullet y_{p-1-P})$ sont extraits de ces registres. Les sommateurs-accumulateurs additionnent alors les produits introduits en même temps qu'ils soustraient les produits extraits. Dans ce cas la démodulation et la quantification sont permanentes et les résultats sont connus au fur et à mesure de l'arrivée des échantillons.

Dans la figure 6 les multiplicateurs 14 à 17 sont remplacés par des multiplicateurs-accumulateurs 61 à 64 qui reçoivent en même temps l'échantillon $z_p$ et l'échantillon $z_{p-1}$ retardé par les lignes à retard. Ces multiplicateur-accumulateurs 61 à 64 délivrent un résultat qui correspond à l'accumulation d'un certain nombre de multiplications. Chacun d'eux effectue d'une part la multiplication des opérandes introduits à ses entrées et d'autre part l'accumulation des résultats de ses multiplications. Dans un exemple il sont des circuits intégrés TDC 1008, 1009 ou 1010 de la Société TRW (Etats-Unis). Dans l'exemple à partir d'un échantillon de rang k donné, chacun des multiplicateurs- accumulateurs 61 à 64 du circuit 10 délivre une accumulation, sur un paquet de 16 échantillons, des produits réels $x_{p-1}{}^\bullet x_p$ et $y_{p-1}{}^\bullet y_p$ et des produits imaginaires $x_p{}^\bullet y_{p-1}$ et $x_{p-1}{}^\bullet y_p$ Chacune de ces accumulations de produits réels ou imaginaires est introduite, à la fin du traitement de chaque paquet, dans un circuit d'addition à décalage respectivement 65 à 68. Les circuits 65 à 68 sont identiques. Le circuit 65, qui est le seul détaillé, comporte un registre 69 à décalage à 5 cases (64/16 + 1) piloté par le séquenceur 13, un additionneur 70 à trois entrées, et une mémoire 71. Chaque case du registre 69 contient le résultat de l'accumulation d'un des cinq derniers paquets successifs d'échantillons.L'additionneur 70 et la mémoire 71 constituent un accumulateur de type classique. Mais comme cet accumulateur de type classique travaille avec le registre 69, à la fin du traitement de chaque paquet d'échantillons son contenu est relatif au P (64) derniers échantillons connus : ici P = 64 du fait du registre 69 à cinq cases. En effet, cet accumulateur de type classique additionne récursivement, au fur et à mesure de leurs arrivées, les accumulations délivrées par le multiplicateur-accumulateur 61. De plus, il retranche l'accumulation relative au paquet dont le rang est antérieur de cinq rangs au rang du dernier paquet qui arrive. Il contient donc en permanence la somme des accumulations des quatre derniers paquets arrivés. Deux sommateurs 72 et 73 reliés respectivement aux circuits 65 et 66 et aux circuits 67 et 68 délivrent les parties réelles X et imaginaires Y de la fonction d'autocorrélation discrète.

En définitive, tout ce passe ici comme dans le circuit de la figure 2. Mais au lieu de prendre un nombre optimal P d'échantillons, on prend des paquets réduits : ici des sous-multiples de P. Au moyen des registres à décalage, 57 et 58 figure 5, ou au moyen des additionneurs à décalage 65 à 68 figure 6, on recombine ces paquets pour avoir une mesure dépendante du nombre optimum P des derniers échantillons connus. Les mesures se recouvrent partiellement. La différence de recouvrement correspond à un paquet d'échantillons.

## Revendications

1. Procédé de mesure des paramètres d'écoulement d'un fluide dans lequel :
   - on émet (48,47) périodiquement selon une fréquence $(\frac{1}{T})$ de récurrence un signal impulsionnel acoustique vibrant à une fréquence $(f_o)$ acoustique ;
   - on reçoit (51,47) le signal acoustique (Z (t)) quand il est rétrodiffusé par une cellule du fluide à étudier ;

- on démodule en quadrature de phase le signal reçu à l'aide de deux oscillateurs (41,42) oscillant à la fréquence du signal acoustique ;
- on filtre (3,4) chacun des deux signaux démodulés et on les quantifie (5,6) pour en extraire respectivement deux grandeurs électriques ($x_p$, $y_p$) correspondant aux parties réelles et imaginaires d'un signal complexe échantillonné ($z_p$) représentatif du signal reçu ; caractérisé en ce que :
- on calcule pour un nombre P d'échantillons du signal complexe échantillonné la fonction d'autocorrélation discrète ($r (\tau)$) de ce signal complexe échantillonné ;
- et on calcule les dérivées d'ordres $\underline{n}$ de cette fonction d'autocorrélation pour obtenir les paramètres d'écoulement du fluide qui correspondent à chacun de ces ordres.

2. Procédé selon la revendication 1 caractérisé en ce que l'on calcule les dérivées d'ordres n de la fonction d'autocorrélation pour un nombre P d'échantillons correspondant à un optimum de précision de la mesure.

3. Procédé selon la revendication 1 ou la revendication 2 caractérisé en ce que l'écoulement du fluide n'étant pas stationnaire le nombre optimal des échantillons et les paramètres d'écoulement du fluide sont calculés en considérant l'écoulement comme stationnaire.

4. Procédé selon l'une quelconque des revendications 1 à 3 caractérisé en ce que pour le calcul du paramètre vitesse moyenne de l'écoulement et pour le calcul du paramètre variance de cet écoulement on calcule séparément la partie réelle (X) et la partie imaginaire (Y) de la fonction d'autocorrélation discrète.

5. Procédé selon l'une quelconque des revendications 1 à 3 caractérisé en ce que pour le calcul du paramètre vitesse moyenne de l'écoulement et/ou pour le calcul du paramètre variance de cet écoulement on calcule (28) pour chaque échantillon l'argument ($\theta_p$) du signal complexe échantillonné.

6. Procédé selon la revendication 4 caractérisé en ce que l'on calcule (61 à 64) partiellement des parties réelles (X) et imaginaires (Y) de la fonction d'autocorrélation correspondant à des paquets d'échantillons (k + 1, k + 16), et en ce que l'on recombine (65-73) les résultats de ces calculs partiels entre eux pour que le calcul de la fonction d'autocorrélation porte sur un nombre optimal (P) d'échantillons supérieur à celui contenu dans les paquets.

7. Dispositif de mesure des paramètres d'écoulement d'un fluide comportant des moyens (47,48) pour émettre périodiquement selon une fréquence ($\frac{1}{T}$) de récurrence un signal impulsionnel acoustique vibrant à une fréquence ($f_o$) acoustique, des moyens (47,50,51) pour recevoir ce signal acoustique (Z (t))quand il est rétrodiffusé par une cellule du fluide à étudier, des moyens pour démoduler en quadrature de phase le signal reçu comportant deux oscillateurs (41,42) accordés à la fréquence (fo) du signal acoustique, et des moyens (3 - 6) pour filtrer et quantifier chacun des deux signaux démodulés et pour produire ainsi un signal complexe échantillonné ($z_p$)représentatif du signal reçu caractérisé en ce qu'il comporte des moyens (10 ou 27) de retard pour calculer le produit du signal complexe échantillonné correspondant à un échantillon (p) par le même signal correspondant à un échantillon (p-1) immédiatement précédent, des moyens sommateurs (18 ou 33) pour sommer les signaux délivrés par les moyens de retard et pour calculer (7) ainsi les parties réelles (X) et imaginaires (Y) du signal complexe représentatif de la fonction d'autocorrélation discrète ($r (\tau)$) du signal complexe échantillonné, et des moyens (8 et 9) pour calculer les dérivés d'ordres $\underline{n}$ de cette fonction d'autocorrélation correspondant aux paramètres d'écoulement du fluide.

8. Dispositif selon la revendication 7 caractérisé en ce que les moyens (8) pour calculer la dérivée d'ordre 1 de la fonction d'autocorrélation comporte des moyens (21) diviseurs pour effectuer la division de la partie imaginaire de la fonction d'autocorrélation par sa partie réelle et des moyens (22) de transformation trigonométriques reliés aux moyens diviseurs pour élaborer un signal représentatif de l'argument (Arg $r (\tau)$) de la fonction d'autocorrélation correspondant à la vitesse moyenne d'écoulement du fluide.

9. Dispositif selon la revendication 7 ou la revendication 8 caractérisé en ce que les moyens (9) pour calculer la dérivée d'ordre 2 de la fonction d'autocorrélation comportent des moyens (23-25) pour élaborer un signal représentatif du module de la fonction d'autocorrélation, des moyens (43) pour mesurer la puissance du signal reçu en présence de bruit et pour mesurer la puissance de ce bruit seul, et des moyens (26) de calcul algébrique pour produire un signal représentatif de la variance de l'écoulement à partir des mesures de ce module et de ces deux puissances.

**10.** Dispositif selon l'une quelconque des revendications 7 à 9 caractérisé en ce que les moyens (10) de retard comportent deux lignes à retard (11,12) reliées aux moyens (5,6) de quantification, quatre multiplicateurs (14-17) pour recevoir sur une de leurs deux entrées la partie réelle ou imaginaire d'un signal complexe échantillonné relatives à un échantillon donné et pour recevoir sur leur deuxième entrée la partie réelle ou complexe du signal échantillonné relative à un échantillon précédent et pour délivrer ainsi les différents termes des parties réelles et imaginaires du produit de ces deux signaux complexes échantillonnés

$$(z_p \cdot z_{p-1}^{*})$$

et en ce que les moyens (18) sommateurs comportent des moyens (19,20) pour délivrer des signaux (X,Y) représentatifs respectivement des sommes des P dernières parties réelles et imaginaires correspondant aux P derniers produits connus.

**11.** Dispositif selon l'une quelconque des revendications 7 à 9 caractérisé en ce que les moyens (27) de retard comportent des moyens (28) de transformation trigonométrique pour calculer pour chaque échantillon l'argument ($\theta_p$) du signal complexe échantillonné, une ligne à retard (30) reliée à ces moyens (28) de transformation trigonométriques et associée à un soustracteur (29) pour calculer l'argument du produit d'un signal complexe échantillonné correspondant à un échantillon par le même signal correspondant à un échantillon précédent, et un jeu (31,32) de moyens de transformation trigonométrique inverse pour calculer à partir de cet argument les parties réelles et imaginaires dudit produit et en ce que les moyens (33) sommateurs comportent des moyens pour délivrer des signaux représentatifs respectivement des sommes des P dernières parties réelles et imaginaires correspondant aux P derniers produits connus.

**12.** Echographe ultrasonore comportant un dispositif de mesure des paramètres d'écoulement du sang dans un vaisseau du corps humain d'un patient mettant en oeuvre le procédé selon l'une quelconque des revendications 1 à 6.

## Claims

**1.** A method for measuring the flow parameters of a fluid comprising:
   - an acoustic pulse signal is periodically transmitted (48 and 47) in accordance with a recurrent frequency ($1/\tau$), said signal vibrating at an acoustic frequency ($f_o$);
   - the acoustic signal ($Z(t)$) is received (51 and 47) when it is retro-diffused by a cell of fluid to be investigated:
   - phase quadrature demodulation of the received signal is performed with the aid of two oscillators (41 and 42) oscillating at the frequency of the acoustic signal;
   - each of the two demodulated signals is filtered (3 and 4) and they are quantified (5 and 6) in order to extract therefrom the respective electrical magnitudes ($x_p$ and $y_p$) corresponding to the real and imaginary parts of a sampled complex signal ($z_p$) representing the received signal;
   characterized in that:
   - for a number P of samples of the complex signal sampled the discrete autocorrelation function ($r-(\tau)$) of the said sampled signal is calculated;
   - and the derivatives of order n of this autocorrelation function are calculated in order to obtain the flow parameters of the fluid corresponding to each of these orders.

**2.** The method as claimed in claim 1 characterized in that the order n derivatives of the autocorrelation function are calculated for a number P of samples corresponding to optimum measurement precision.

**3.** The method as claimed in claim 1 or in claim 2, characterized in that, the flow of the liquid not being in a steady state, the optimum number of samples and the parameters of flow of the fluid are calculated taking into account the flow as if it were a steady state flow.

4. The method as claimed in any one of the preceding claims 1 through 3, characterized in that for the calculation of the mean velocity parameter of the flow and for the calculation of the variance parameter of the said flow the real part (X) and the imaginary part (Y) of the discrete autocorrelation function are calculated.

5. The method as claimed in any one of the preceding claims 1 through 3, characterized in that for the calculation of the mean velocity parameter of the flow and/or for the calculation of the variance parameter of the said flow for each signal the argument ($\theta_p$) of the sample complex signal is calculated (28).

6. The method as claimed in claim 4, characterized in that the real (X) and imaginary (Y) parts of the autocorrelation function corresponding to packages of samples (k + 1 and k + 16) are partially calculated (61 through 64) and in that the results of these partial calculations are recombined (65 through 73) among themselves so that the calculation of the autocorrelation function is directed to an optimum number (P) of samples in excess of that contained in the packages.

7. A measuring device for the flow parameters of flow of a fluid comprising means (47 and 48) in order to periodically transmit at a recurrent frequency ($1/\tau$) an acoustic pulse signal vibrating at an acoustic frequency ($f_o$), means (47, 50 and 51) for receiving the said acoustic signal (Z(t)) when it is retro-diffused by a cell of the fluid to be investigated, means to phase quadrature demodulate the received signal comprising two oscillators (41 and 42) tuned to the frequency (fo) of the acoustic signal, and means (3 through 6) in order to filter and quantify each of the demodulated signals and in order to thus produce a sampled complex signal ($z_p$) representing the received signal, characterized in that it comprises delay means (10 or 27) in order to calculate the product resulting from the multiplication of the complex sampled signal corresponding to a sample (p) with the same signal corresponding to a sample (p-1) immediately preceding it, summating means (18 or 33) in order to summate the signals supplied by the delay means and in order to thus calculate (7) the real parts (X) and the imaginary parts (Y) of the complex signal representing the discrete autocorrelation function ($r(\tau)$) of the sampled complex signal, and means (8 and 9) in order to calculate the $\underline{n}$ order derivatives of this autocorrelation function corresponding to the flow of the said fluid.

8. The device as claimed in claim 7, characterized in that the means (8) for the calculation of the order 1 derivative of the autocorrelation function comprise dividing means (21) in order to perform the division of the imaginary part of the autocorrelation function by its real part and trigonometrical transformation means (22) connected with the dividing means in order to elaborate a signal representing the argument (Arg $r(\tau)$) of the autocorrelation function corresponding to the mean flow velocity of the fluid.

9. The device as claimed in claim 7 or in claim 8, characterized in that the means (9) to calculate the order 2 of the autocorrelation function comprise means (23 through 25) in order to elaborate a signal representative of the modulus of the autocorrelation function, means (43) in order to measure the power of the received is signal in the presence of noise and in order to measure the power of such noise alone and algebraic calculating means (26) to produce a signal representative of the variance of the flow on the basis of measurements of this modulus and of such two powers.

10. The device as claimed in any one of the preceding claims 7 through 9, characterized in that the delay means (10) comprise two delay lines (11 and 12) connected with the quantifying means (56), four multipliers (14 through 17) in order to receive, at one of their inputs, the real part or the imaginary part of the sampled complex signal relating to a given sample and in order to receive, at their second input, the real or complex part of the sample signal relating to a preceding sample and in order to thus supply the different terms of the real and imaginary parts of the product of these two complex sampled signals

$$(z_p \cdot z_{p-1}^*)$$

and in that the summating means (18) comprise means (19 and 20) in order to supply signals (X and Y)

13

EP 0 140 726 B1

representative of the sums of the P last real and imaginary parts corresponding to the P last known products.

**11.** The device as claimed in any one of the preceding claims 7 through 9, characterized in that the delay means (27) comprise means (28) for trigonometrical transformation in order to calculate, for each sample, the argument ($\theta_p$) of the complex sampled signal, a delay line (30) connected to these means (28) for trigonometrical transformation and associated with a subtracter (29) in order to calculate the argument of a complex sampled signal corresponding to a sample by the same signal corresponding to a preceding sample, and a set (31 and 32) of inverse trigonometrical transformation means in order to calculate, on the basis of this argument, the real and imaginary parts of the said product and in that the summating means (33) comprise means in order to supply signals respectively representative of the sums of the P last real and imaginary parts corresponding to the P last known products.

**12.** An ultrasonic echograph comprising a device for the measurement of blood flow parameters in a vessel in the human body of a patient for performing the method in accordance with any one of the preceding claims 1 through 6.

### Ansprüche

**1.** Verfahren zum Messen von Strömungsparametern eines Fluids, in dem:
   - periodisch entsprechend einer Wiederholfrequenz (1/$\tau$) ein akustisches Impulssignal, das mit einer Schallfrequenz ($f_0$) schwingt, ausgesandt wird (48, 47);
   - das akustische Signal (Z(t)) empfangen wird (51, 47), wenn es von einer zu untersuchenden Fluidzelle zurückgestreut wird;
   - das empfangene Signal mit Hilfe zweier mit der Frequenz des Schallsignals oszillierender Oszillatoren (41, 42) in Phasenquadratur demoduliert wird;
   - jedes der zwei demodulierten Signale gefiltert (3, 4) und quantifiziert (5, 6) wird, um zwei den Real- bzw. den Imaginärteilen eines das empfangene Signal darstellenden komplexen abgetasteten Signals ($z_p$) entsprechende elektrische Größen ($x_p$, $y_p$) zu gewinnen;
   dadurch gekennzeichnet, daß
   - für eine Anzahl P von Abtastproben des komplexen abgetasteten Signals die diskrete Autokorrelationsfunktion (r($\tau$)) dieses komplexen abgetasteten Signals berechnet wird;
   - und die Ableitungen n-ter Ordnung dieser Autokorrelationsfunktion berechnet werden, um die jeder dieser Ordnungen entsprechenden Strömungsparameter des Fluids zu gewinnen.

**2.** Verfahren gemäß Anspruch 1, dadurch gekennzeichnet, daß die Ableitungen n-ter Ordnung der Autokorrelationsfunktion für eine einer optimalen Meßgenauigkeit entsprechende Anzahl P von Abtastproben berechnet werden.

**3.** Verfahren gemäß Anspruch 1 oder Anspruch 2, dadurch gekennzeichnet, daß für eine nichtstationäre Fluidströmung die optimale Anzahl von Abtastproben und die Strömungsparameter des Fluids unter der Annahme einer stationären Strömung berechnet werden.

**4.** Verfahren gemäß einem der Ansprüche 1 bis 3, dadurch gekennzeichnet, daß für die Berechnung des mittleren Geschwindigkeitsparameters der Strömung und für die Berechnung der Varianz dieser Strömung der Realteil (X) und der Imaginärteil (Y) der diskreten Autokorrelationsfunktion getrennt berechnet werden.

**5.** Verfahren gemäß einem der Ansprüche 1 bis 3, dadurch gekennzeichnet, daß für die Berechnung des mittleren Geschwindigkeitsparameters der Strömung und/oder für die Berechnung des Varianzparameters dieser Strömung für jede Probe das Argument ($\theta_p$) des komplexen abgetasteten Signals berechnet wird (28).

**6.** Verfahren gemäß Anspruch 4, dadurch gekennzeichnet, daß die den Probensätzen (k + 1, k + 16) entsprechenden Realteile (X) und Imaginärteile (Y) der Autokorrelationsfunktion teilweise berechnet werden (61 - 61) und daß die Ergebnisse dieser Teilberechnungen untereinander rekombiniert werden (65 bis 73), damit die Berechnung der Autokorrelationsfunktion auf eine optimale Anzahl (P) von

14

**EP 0 140 726 B1**

Abtastproben gestützt ist, die größer als die in den Sätzen enthaltene ist.

7. Vorrichtung zum Messen der Strömungsparameter eines Fluids, mit Mitteln (47, 48) zum periodischen Aussenden entsprechend einer Wiederholfrequenz ($1/\tau$) eines mit einer Schallfrequenz ($f_0$) schwingenden akustischen Impulssignals, Mitteln (47, 50, 51) zum Empfangen dieses akustischen Signals (Z(t)), wenn dieses von einer zu untersuchenden Fluidzelle zurückgestreut wird, Mitteln zur Demodulation des empfangenen Signals in Phasenquadratur, die zwei auf die Frequenz ($f_0$) des Schallsignals abgestimmte Oszillatoren (41, 42) enthalten, und Mitteln (3 bis 6) zum Filtern und Quantifizieren eines jeden der zwei demodulierten Signale, um auf diese Weise ein das empfangene Signal darstellendes komplexes abgetastetes Signal ($z_p$) zu erzeugen, dadurch gekennzeichnet, daß sie Verzögerungsmittel (10 oder 27) zum Berechnen des Produktes des einer Probe (p) entsprechenden komplexen abgetasteten Signals mit dem gleichen, einer unmittelbar vorgehenden Probe (p-1) entsprechenden Signal, Summatormittel (18 oder 33) zum Summieren der von den Verzögerungsmitteln ausgegebenen Signale, um auf diese Weise die Realteile (X) und Imaginärteile (Y) des die diskrete Autokorrelationsfunktion ($r(\tau)$) des komplexen abgetasteten Signals darstellenden komplexen Signals zu berechnen, und Mittel (8 und 9) zum Berechnen der den Strömungsparametern des Fluids entsprechenden Ableitungen $\underline{n}$-ter Ordnung dieser Autokorrelationsfunktion umfaßt.

8. Vorrichtung gemäß Anspruch 7, dadurch gekennzeichnet, daß die Mittel (8) zum Berechnen der Ableitung 1. Ordnung der Autokorrelationsfunktion Dividiermittel (21) zum Ausführen der Division des Imaginärteils der Autokorrelationsfunktion durch ihren Realteil und trigonometrische Transformationsmittel (22), die mit den Dividiermitteln verbunden sind, um ein Signal zu entwickeln, das das der mittleren Strömungsgeschwindigkeit des Fluids entsprechende Argument (Arg $r(\tau)$) der Autokorrelationsfunktion darstellt, umfassen.

9. Vorrichtung gemäß Anspruch 7 oder Anspruch 8, dadurch gekennzeichnet, daß die Mittel (9) zum Berechnen der Ableitung 2. Ordnung der Autokorrelationsfunktion Mittel (23 bis 25) zum Entwickeln eines den Betrag der Autokorrelationsfunktion darstellenden Signals, Mittel (43) zum Messen der Intensität des empfangenen Signals bei vorhandenem Rauschen und zum alleinigen Messen der Intensität des Rauschens und algebraische Rechenmittel (26) zum Erzeugen eines die Varianz der Strömung darstellenden Signals anhand der Messungen dieses Betrags und dieser zwei Intensitäten umfassen.

10. Vorrichtung gemäß einem der Ansprüche 7 bis 9, dadurch gekennzeichnet, daß die Verzögerungsmittel (10) zwei mit Quantifizierungsmitteln (5, 6) verbundene Verzögerungsleitungen (11, 12), vier Multiplikatoren (14 bis 17) zum Empfangen des Realteils oder des Imaginärteils eines auf eine gegebene Probe bezogenen komplexen abgetasteten Signals an einem ihrer zwei Eingänge und zum Empfang des Realteils oder des Imaginärteils des auf eine vorhergehende Probe bezogenen abgetasteten Signals an deren zweiten Eingang, um so die verschiedenen Terme der Realteile und der Imaginärteile des Produktes dieser zwei komplexen abgetasteten Signale ($z_p$ · $z_{p-1}^*$) auszugeben, umfassen und daß die Summatormittel (18) Mittel (19, 20) umfassen, um Signale (X, Y) auszugeben, die jeweils die Summen der P letzten Realteile und Imaginärteile, die den P letzten bekannten Produkten entsprechen, darstellen.

11. Vorrichtung gemäß einem der Ansprüche 7 bis 9, dadurch gekennzeichnet, daß die Verzögerungsmittel (27) trigonometrische Transformationsmittel (28) zum Berechnen des Arguments ($\theta_p$) des komplexen abgetasteten Signals für jede Probe, eine mit diesen trigonometrischen Transformationsmitteln (28) verbundeneund einem Subtraktor (29) zugeordnete Verzögerungsleitung (30) zum Berechnen des Arguments des Produktes eines einer Probe entsprechenden komplexen abgetasteten Signals mit dem gleichen, einer vorhergehenden Probe entsprechenden Signal und eine Gruppe (31, 32) von Mitteln zur inversen trigonometrischen Transformation zum Berechnen der Realteile und der Imaginärteile dieses Produktes anhand dieses Arguments umfassen und daß die Summatormittel (33) Mittel umfassen, die Signale ausgeben, die jeweils die Summen der P letzten Realteile und Imaginärteile, die den P letzten Produkten entsprechen, darstellen.

12. Ultraschallechograph mit einer Vorrichtung zum Messen der Strömungsparameter des Blutes in einem Gefäß des menschlichen Körpers eines Patienten, in dem das Verfahren gemäß einem der Ansprüche 1 bis 6 ausgeführt wird.

# FIG_1

45 53 46

44

49

47

EMISSION
$\left(\frac{1}{6}, \delta \cdot\right)$ 48

50

$Z_{(t)}$

RECEPTION
$R(\tau)$ 51

ENREGISTREMENT 52

# FIG_4

Y X

h

Log 54

Log 52

55

56

+ −

h

Arc tg exp 53

8

Fmoy

# FIG_2

# FiG_ 3

EP 0 140 726 B1

# FIG_5

# FIG_6